# EUROPEAN PATENT SPECIFICATION

(11) **EP 4 589 883 B1**
(45) Date of publication and mention of the grant of the patent: **04.11.2026**
(21) Application number: 24152421.4
(22) Date of filing: 17.01.2024
(51) Int. Cl.: H04L 9/40

(54) **COMPUTER-IMPLEMENTED METHOD AND SYSTEM FOR AUTOMATICALLY GENERATING A SECURITY CONFIGURATION FOR A CONTROL SYSTEM**
COMPUTERIMPLEMENTIERTES VERFAHREN UND SYSTEM ZUR AUTOMATISCHEN ERZEUGUNG EINER SICHERHEITSKONFIGURATION FÜR EIN STEUERUNGSSYSTEM
PROCÉDÉ ET SYSTÈME MIS EN UVRE PAR ORDINATEUR POUR GÉNÉRER AUTOMATIQUEMENT UNE CONFIGURATION DE SÉCURITÉ POUR UN SYSTÈME DE COMMANDE

(43) Date of publication of application: 23.07.2025
(73) Proprietor: ABB SCHWEIZ AG, 5400 Baden (CH)
(72) Inventor: KOHNHAEUSER, Florian, 64560 Riedstadt (DE); ANANIEVA, Sofia, 69221 Dossenheim (DE); HARK, Rhaban, 64347 Griesheim (DE)
(74) Representative: Maiwald GmbH

(56) References cited:
- US-A1- 2010 192 195
- US-A1- 2015 067 844
- US-A1- 2015 213 369
- US-A1- 2022 086 194

## Description

### FIELD OF THE INVENTION

The present invention relates to a computer-implemented method and a system for automatically generating a security configuration for a control system.

### BACKGROUND OF THE INVENTION

Future industrial control systems are envisioned to make use of orchestration technologies to be deployable, manageable, and alterable flexibly. To prevent potential security breaches and data leaks, it is crucial that an orchestrated system, e.g. a control system, is being properly and securely configured. The US201521336 A1 refers to a system and methodology providing automation security analysis and network intrusion protection in an industrial environment. The US2015067844 A1 refers to a system and methodology providing automation security analysis, validation, and learning in an industrial controller environment. The US2010192195 A1 refers to a managing security configuration through machine learning combinatorial optimization and attack graphs. The US2022086194 A1 refers to a security configuration manager.

Proper configuration ensures that sensitive information such as API tokens, secrets, and container images are adequately protected, reducing the risk of unauthorized access. Additionally, well-configured control systems minimize the surface area for attacks, enhancing overall system resilience and maintaining the integrity of applications and services.

However, ensuring a secure operation of a control system is mainly a manual process and thus, is error-prone, time-consuming, and requires expert knowledge. This is because securing a container control system presents significant challenges due to its complex and dynamic nature. Its distributed architecture involves numerous components, each requiring a proper configuration to prevent vulnerabilities. Managing authentication, authorization, security policies, and network policies entails a variety of deployment options, which demand in-depth understanding. Continuous updates, compatibility issues, and changes at runtime make maintaining security a constant effort. Moreover, the interplay between security and operational needs, such as usability, availability, performance, and resource-efficiency, requires a balanced approach that often requires specialized expertise to ensure comprehensive protection without hindering functionality. The lack of a one-size-fits-all solution means that security often involves custom configurations based on specific application needs, which demands specialized knowledge and manual intervention. This complexity can lead to human errors during setup and configuration.

There is a need to address these issues.

### SUMMARY OF THE INVENTION

Therefore, it would be advantageous to provide an improved concept for a control system that is efficient to operate and enables establishing and maintaining a defined security level in an automated manner.

The object of the present invention is solved by the subject matter of the independent claims, wherein further embodiments are incorporated in the dependent claims.

In a first aspect of the present invention, there is provided a computer-implemented method for automatically generating a security configuration for a control system, comprising the steps:
- providing a first data configured as engineering data related to information about the control system,
- providing at least second data related to topology model data of the control system; and
- generating the security configuration for the control system by a policy generator based on the first data and/or the at least second data, wherein the generated security configuration includes a security dataset for the control system.

In other words, a core idea behind the present invention is to automate generating a security configuration for or of a control system that can be embodied e.g. as a runtime orchestrator for a Distributed Control System (DCS).

In the present invention, a container orchestration system is worded in general way as a control system.

As a first aspect, the present invention uses or leverages the DCS's engineering data as first data. The engineering data contains information for example about the industrial process control environment of the control system, such as necessary components, the interaction between components, access control definitions, and auditing rules or the like. This information helps to build the security configuration of the control system, e.g. a runtime orchestrator.

As a second aspect, in order to build the security information for the control system by a policy generator, second data are used that relate to topology model data of the control system. In this way, efforts are made in standardizing cloud-orchestration topology models that runtime orchestrators utilize for the deployment of the system.

Examples for such topology model data include automated machine-learning models (ML), e.g. OASIS TOSCA. These models also contain valuable information, such as the application type, communication endpoints, and the interconnection between applications, that is utilized to derive security datasets.

As part of the present invention, a security policy generator component is used that takes the above-mentioned engineering data, topology model, and optionally desired security requirements as input data, and automatically derives or generates a security configuration for the resulting (control) orchestration system.

The derived security configuration includes, among others, the definition of network policies and container security policies. While network policies specify which components are allowed and disallowed to communicate with each other, container security policies define the capabilities, access permissions, resources, and syscalls that a container is allowed to use. Further security datasets derived by the policy generator include, but are not limited to, access control, secure monitoring, secure logging, and auditing.

The security policy generator as part of the present invention provides an automated solution to secure container orchestration systems for DCSs.

As one advantage of the present invention, not only consistent and standardized security measures are ensured, but also the risk of misconfigurations is reduced. Further, the present invention reduces the manual effort and expert knowledge required to ensure the security of a container orchestration system.

Further, by considering security requirements, compliance with customer requirements and security regulations can be automatically ensured. As container orchestration technologies as well as security threats evolve rapidly, automation becomes crucial to efficiently handle the challenges posed by new technologies and system changes.

In this way, an automated solution to secure container orchestration systems, e.g. control systems of any possible type, is provided to enable said secure-by-design orchestration system that requires less manual effort and expert knowledge to establish and maintain security of a defined level of said control system.

In summary, the following and further advantages are achieved by the present invention:
- Automatically derivable security datasets from engineering data, topology models and security requirements
- Automated security datasets for network segmentation
- Automated security policies to restrict container permissions
- Secure by default runtime orchestration system
- Less manual effort and expert knowledge needed to securely configure a runtime orchestration system
- Automated compliance with security regulations and security requirements

According to an example, after the step of generating the security configuration, a step of optimizing the security configuration based on third data related to at least a security requirement of the control system is performed. In this way, the advantage is achieved that the security configuration of the control system is automatically and efficiently adaptable to process changes or security changes for different application scenarios.

According to an example, a step of providing feedback regarding a system condition information of the control system to the policy generator is performed in order to adjust the generated security configuration of the control system. **In** this way, the advantage is achieved that the generated security configuration by the policy generator reflects changes of the control system immediately.

According to an example, at least some of the steps of providing first data, providing second data and generating the security configuration are performed in an offline phase during a startup phase of the control system. In this way, efficient generation of a security configuration for the control system can be ensured.

According to an example, the step of providing feedback is performed in an online phase during a runtime operation of the control system. In this way, it is ensured that the generation of the security configuration for the control system reflects an actual condition of the control system.

According to an example, the at least one security dataset addresses at least one parameter for a container orchestration system at least including nodes, pods, applications, and inter-component communications within a cluster. In this way, an efficient control management of the container orchestration system can be achieved.

According to an example, the generated security configuration restricts at least one of the following: a communication capability between components of the control system, limits a resource-consumption of at least one component of the control system, restricts access to at least one computational resource of the at least one component of the control system, enabling user authentication and authorized access to the control system or enabling logging of security events in respect of the control system. In this way, the specific dataset is made more specific allowing an efficient control of the control system.

According to an example, the step of providing feedback regarding a system condition information of the control system to the policy generator is supported by a human who is interactively queried for feedback that help adapt and improve the security configuration of the control system. In this way, the advantage is achieved that optimizing the security dataset can be performed in a more efficient manner when using input from a human security expert to tune or to optimize the security dataset.

According to an example, the policy generator uses an at least partly a database that stores previously generated and optimized security configurations for the control system. In this way, the advantage is achieved that up-to-date information about the security configuration of other comparable control systems can be achieved, which may have been optimized by a human. Thus, the policy generator is able to learn and / or to improve after its deployment by updating the database with new entries. The at least one database can be at least partly an internal and /or an external database (for example the database may be cloud-based database) related to the control system. In this manner, a security configuration for similar control systems stored in the database can be derived and further, be efficiently used for other similar control systems.

According to an example, after the step of generating the security configuration, the step of optimizing the security configuration is based on fourth data related to at least a safety requirement of the control system. The advantage achieved is to optimize the security configuration in an efficient manner.

According to an example, after the step of generating the security configuration, a step of simulating the security configuration is performed to assess its impact on a performance parameter of the control system. In this way, performance of the control system can be efficiently optimized.

According to an example, the step of providing feedback regarding a system condition information of the control system to the policy generator is supported by a human who is interactively queried for feedback that help adapt and improve the security configuration of the control system. In this way, performance of the control system can be efficiently optimized.

In a second aspect of the present invention, a system is provided for generating a security configuration for a control system according to the first aspect and / or previous examples.

In a third aspect of the present invention, a computer comprising a processor configured to perform the method according to the first aspect is provided.

In a fourth aspect of the present invention, a computer program product is provided comprising instructions which, when the computer program is executed by a processor of a computer, causes the computer to control the method of the first aspect.

In a fifth aspect, a machine-readable data medium and / or download product is provided containing the computer program according to the third aspect.

### BRIEF DESCRIPTION OF THE DRAWINGS

Exemplary embodiments will be described in the following with reference to the following drawings:
Fig. 1 illustrates a schematic flow-diagram of a method of the present invention; and
Fig. 2 illustrates a system for generating a security configuration for a control system according to an embodiment of the present invention.

### DETAILED DESCRIPTION OF THE DRAWINGS

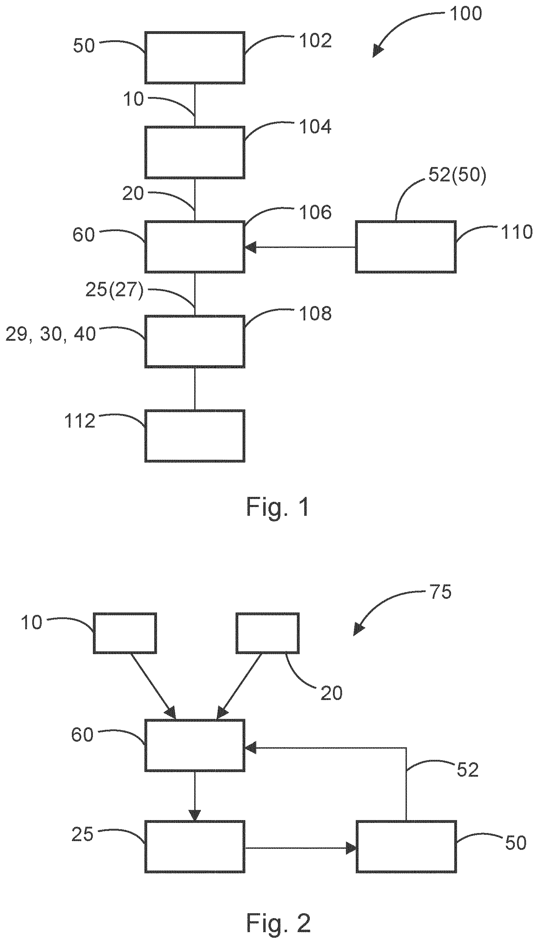

Fig. 1 illustrates a schematic flow-diagram of a computer-implemented method 100 for automatically generating a security configuration 25 for a control system 50 of the present invention.

In a first step 102, first data 10 are provided wherein the first data 10 are configured as engineering data related to information about the control system 50 and / or an industrial process control environment of the control system 50.

In a second step 104, at least second data 20 related to topology model data of the control system 50 are provided.

In a third step 106, the security configuration 25 for the control system 50 is generated by a policy generator 60 based on the first data 10 and/or the at least second data 20. The generated security configuration 25 includes at least a security dataset 27 for the control system 50. The at least one security dataset 27 may also involve a network policy for the control system 50.

Optionally, after the step of generating 106 the security configuration 25, an additional step 108 of optimizing the security configuration is performed. This step 108 is based on third data 30 that relates to at least a security requirement 29 of the control system 50. In this way, the at least one security dataset is optimized according to at least a predefined security requirement provided, e.g. by the control system 50.

Optionally, after the step of generating 106 the security configuration 25, a further step 110 is performed. In this step 110, feedback regarding a system condition information 52 of the control system 50 is provided to the policy generator 60. In this way the generated security configuration 25 of the control system 50 is adjusted, e.g. due to changes of the control system 50.

Preferably, the step 110 of providing feedback and / or the step of adjusting the generated security configuration 25 for the control system 50 is also performed in an online phase during a runtime operation of the control system 50.

Optionally, at least some of the steps 102, 104, 106 are performed in an offline phase during a startup / initialization phase of the control system 50.

Optionally, the at least one security dataset 27 addresses at least one parameter for a container orchestration system, at least including nodes, pods, applications, and inter-component communications within a cluster.

Examples for a container orchestrator system may be for example products like Kubernetes, OpenShift, Microshift, K3s etc.

A parameter or a property for or of a container orchestrator system can for example be one of the following, but is not restricted to this:
- network policies
- security context
- Linux capabilities
- User ID + Group ID

A cluster in the sense of the present invention is a term for the entire system controlled by the container orchestrator.

Optionally, the generated security configuration 25 restricts at least one of the following: a communication capability between components of the control system 50, limits a resource-consumption of at least one component of the control system 50, restricts access to at least one computational resource of the at least one component of the control system 50, enabling user authentication and authorized access to the control system 50 or enabling logging of security events in respect of the control system 50.

Optionally, the step 110 of providing feedback regarding a system condition information 52 of the control system 50 to the policy generator 60 is supported by a human who is interactively queried for feedback that help adapt and improve the security configuration of the control system 50.

Optionally, the policy generator 60 uses an at least partly a database (internally and/or externally related to the control system 50) that stores previously generated and optimized security configurations for the control system 50.

Optionally, after the step of generating 106 the security configuration 25, the step of optimizing 108 the security configuration based on fourth data 40 related to at least a safety requirement 29 of the control system 50.

A safety requirement may for example be a functional requirement regarding latency issues, redundancy issues for an industrial application, e.g. a plant process.

Optionally, after the step of generating 106 the security configuration 25, a step of simulating 112 the security configuration 25 is performed to assess its impact on a performance parameter of the control system 50.

Fig. 2 illustrates a system 70 for generating a security configuration 25 by a policy generator 60 for a control system 50 according to an embodiment of the present invention.

In the following, the principle of the policy generator 60 in the context of the system 70 with the control system 50 is described in more detail.

First data 10 and second data 20 are provided as input data for the policy generator 60. The policy generator 60 generates the security configuration 25 for the control system 50 that is provided to the control system 50.

At the same time and continuously, the control system 50 provides feedback to the policy generator 60 reporting a current and / or updated system condition, a security condition, at least one security dataset 27 or a security requirement 29 for the control system 50. In this manner, it is ensured that the generated security configuration 25 does reflect at any time of the operation of the control system 25 the current status condition of the control system 25.

In this context, it should be noted that when deriving the security dataset 27, the policy generator 60 may optionally also consider security requirements as input, which allow to fine-tune the security dataset 27 of the control system. For instance, the policy generator can be requested to generate a security dataset 27 that complies with IEC 62443, including a specific security level (SL1-SL4).

Depending on the specific requirements, the trade-off between security, usability, and performance is adjusted by the policy generator. In addition, decisions made by the runtime orchestrator / control system during operation are fed back to the policy generator. This allows the policy generator 60 to adapt the security dataset 27 according to changes in the control system 50.

In a further aspect, the policy generator 60 may be operated in two phases: an offline and an online phase. The offline phase is executed once, before the deployment of the control system 50. In this phase, initial security dataset 27 are derived that are used by the orchestrator during start-up of the control system 50.

The online phase is executed recurrently during the operation of the orchestrator. In this phase, the security dataset 27 are adjusted according to changes made by the runtime orchestrator in the cluster or new security requirements fed into the policy generator. In this context, it should be noted that the orchestrator is a part or a component of the control system 50. The orchestrator handles an IT-specific part of the control system 50 while the control system itself controls the physical process for example an industrial plant etc.

In the offline phase, the policy generator processes the engineering data, topology model, and security requirements.

From the engineering data 10 and topology model data 20, the policy generator 60 extracts dependencies between the components to be deployed and their communication intents. Using this information, the policy generator 60 defines a network policy for the runtime orchestrator.

The network policy defines rules for allowed incoming (ingress) communication and outgoing (egress) communication. In addition, communication relations are defined, e.g., that "Application A" is only allowed to communicate with "Application B", but no other component. To derive network policies, information about end-to-end latency requirements, e.g., from TOSCA, and endpoint definitions, e.g., from engineering data, is utilized.

In addition to communication intents that are explicitly defined in the engineering data 10 and topology model data 20, other information or third data 30 is used to derive further security information.

For example, the type of a component includes information on required access to underlying services, files, and system calls. In the context of control systems, a common requirement towards the underlying operating system is access to real-time capabilities. Unexpected system calls can therefore be classified as security threat depending on the component type.

There is a wide range of runtime security anomalies which are special to the domain of control systems and derivable from the system specification. Actions that would be considered harmless in regular cloud-scenarios but not in control systems, such as attempting to communicate with external parties, inserting removable devices, etc. will be defined as threats by the policy generator. Looking at future scenarios where the use of cloud-native technologies like containerization are predominant, the policy generator particularly derives settings such as the security context settings and CPU/memory load of containers, etc. Such domain knowledge is encoded in rules and inserted into the policy generator beforehand.

The policy generator 60 of the present invention also considers the sensitivity of applications and services when assigning hosts. In particular, it will create policies that ensure that sensitive services are hosted in isolation from other services.

Regarding access control, policies might enforce how users must authenticate (e.g., certificate, token, password, biometric, etc.) and whether a 2nd - factor must be used for authentication. The requirements towards authentication might depend on the authorization level of the user. A user who is authorized to only access less-sensitive services may not require a 2nd factor, while users with permission to access sensitive or otherwise critical services must use a 2nd factor.

Finally, also monitoring and logging are considered by the policy generator, as longs can expose sensitive information if not properly secured. For example, logs of sensitive services are themselves declared sensitive and must thus be encrypted and may only be stored on isolated nodes and not together with other services of lower sensitivity to avoid access by users with inadequate permissions. Alternatively, a policy could ensure that only certain events of sensitive services may be logged in order to make the logs themselves non-sensitive.

In the online phase, the policy generator 60 adapts the security dataset 27 of the deployed DCS based on changes that occur during its operation due to altered security requirements or modifications made to the cluster performed by the runtime orchestrator.

For example, security requirements may change during operation of the DCS due to new security regulations (cf. EU Cyber Resilience Act), due to a change in customer requirements (e.g., customer demanding IEC 62443 SL3 now instead of SL2) or due to updates of threat databases. Furthermore, the runtime orchestrator itself may decide to perform modifications to the cluster, such as updates of components or addition of new components. These cluster changes may have an impact on the security of the DCS which may require adoption of security dataset 27 to be able to continuously guarantee security. For example, if a new, potentially untrustworthy 3rd party component is to be deployed in the DCS, the security dataset 27 must ensure that the new component is deployed on a physically separate node and with strict application sandboxing.

Further, by generating the automated security configuration 25, it is also possible to provide automated security datasets 27 for a network segmentation. This means in particular that a (segmented) network behind the control system 50 can be feed by the security dataset 27 that can be derived by the generated security configuration 25 of the policy generator 60. In this context, it should be noted that information about which components should be able and allowed to communicate with each other can, among others, be derived from latency requirements that are defined in the topology model.

As a further aspect of the present invention, starting from or by using the generated security configuration 25, automated security policies can be derived and generated which in particular help to restrict access permissions to parts of the control system 50 and / or the network connected to the control network 50.

Access permissions based on the generated security configuration 25 may also affect read/write - rights for applications accessing the control system 50.

The security configuration 25 may also enforce resource consumption limits, e.g., regarding CPU time, memory consumption, network bandwidth. This allows to mitigate denial of service attacks (intentional overloading to cause unavailability) on the system 70.

A further aspect regarding the generated security configuration 25 is that user authentication and authorization rights to access the control system 50 can be efficiently controlled and flexibly handled depending on the application scenario of the control system 50. In this manner, authentication and authorization rights can be combined to define access permissions to the control system 50.

A further aspect regarding the generated security configuration 25 is that auditing, logging & monitoring of the control system 25 can be handled in a more efficient manner. Also, documentation of user behaviour in view of the control system 50 or operations performed to control the control system 50 can be configurated in an automated manner and adapted to various use-case-scenarios.

### Reference signs

- 10: First data / Engineering data
- 20: Second data / Topology model data
- 25: Security configuration
- 27: Security dataset
- 29: Security requirement
- 30: Third data
- 40: Fourth data

- 50: Control system
- 52: System condition
- 60: Policy generator
- 70: System

- 100: Method
- 102: Providing
- 104: Providing
- 106: Generating
- 108: Optimizing
- 110: Providing
- 112: Simulating

## Claims

1. Computer-implemented method (100) for automatically generating a security configuration (25) for a control system (50), comprising:
- Providing (102) a first data (10) configured as engineering data related to information about the control system (50),
- Providing (104) at least second data (20) related to topology model data of the control system (50), wherein the topology model data includes automated machine-learning models (ML), wherein these models also contain at least one of the following pieces of information: application type, communication endpoints, interconnection between applications;
- Generating (106) the security configuration (25) for the control system (50) by a policy generator (60) based on the first data (10) and the at least second data (20), wherein the generated security configuration (25) includes at least a security dataset (27) for the control system (50).

2. Computer-implemented method (100) according to claim 1, wherein after the step of generating (106) the security configuration (25), a step of optimizing (108) the security configuration based on third data (30) related to at least a security requirement (29) of the control system (50) is performed.

3. Computer-implemented method (100) according to any of the previous claims, wherein a step (110) of providing feedback regarding a system condition information (52) of the control system (50) to the policy generator (60) is performed in order to adjust the generated security configuration (25) of the control system (50).

4. Computer-implemented method (100) according to any of the previous claims, wherein at least some of the steps (102, 104, 106) are performed in an offline phase during a startup phase of the control system (50).

5. Computer-implemented method (100) according to claim 3, wherein the step (110) of providing feedback is performed in an online phase during a runtime operation of the control system (50).

6. Computer-implemented method (100) according to any of the previous claims, where the at least one security dataset (27) addresses at least one parameter for a container orchestration system, at least including nodes, pods, applications, and inter-component communications within a cluster.

7. Computer-implemented method (100) according to any of the previous claims, where the generated security configuration (25) restricts at least one of the following: a communication capability between components of the control system (50), limits a resource-consumption of at least one component of the control system (50), restricts access to at least one computational resource of the at least one component of the control system (50), enabling user authentication and authorized access to the control system (50) or enabling logging of security events in respect of the control system (50).

8. Computer-implemented method (100) according to claim 3, wherein the step (110) of providing feedback regarding a system condition information (52) of the control system (50) to the policy generator (60) is supported by a human who is interactively queried for feedback that help adapt and improve the security configuration of the control system (50).

9. Computer-implemented method (100) according to any of the previous claims, wherein the policy generator (60) uses an at least partly a database (internal, external) that stores previously generated and optimized security configurations for the control system (50).

10. Computer-implemented method (100) according to any of the previous claims 2 to 9, wherein after the step of generating (106) the security configuration (25), the step of optimizing (108) the security configuration based on fourth data (40) related to at least a safety requirement (29) of the control system (50).

11. Computer-implemented method (100) according to any of the previous claims, wherein after the step of generating (106) the security configuration (25), a step of simulating (112) the security configuration (25) is performed to assess its impact on a performance parameter of the control system (50).

12. System (70) comprising means configured to perform the method of any of claims 1 to 11.

13. A computer program product comprising instructions which, when the computer program is executed by a processor of a computer, causes the computer to perform the method of any of claims 1 to 11.

14. Machine-readable data medium and / or download product containing the computer program according to claim 13.

## Patentansprüche

1. Computerimplementiertes Verfahren (100) zum automatischen Erzeugen einer Sicherheitskonfiguration (25) für ein Steuerungssystem (50), umfassend:
- Bereitstellen (102) erster Daten (10), die als Engineering-Daten in Bezug auf Informationen über das Steuerungssystem (50) ausgestaltet sind,
- Bereitstellen (104) von mindestens zweiten Daten (20), die sich auf Topologiemodelldaten des Steuerungssystems (50) beziehen, wobei die Topologiemodelldaten automatisierte Machine-Learning-Modelle (ML) umfassen, wobei diese Modelle außerdem mindestens eine der folgenden Informationen enthalten: Anwendungstyp, Kommunikationsendpunkte, Zusammenschaltung zwischen Anwendungen;
- Erzeugen (106) der Sicherheitskonfiguration (25) für das Steuerungssystem (50) durch einen Policy-Generator (60) auf der Grundlage der ersten Daten (10) und der mindestens zweiten Daten (20), wobei die erzeugte Sicherheitskonfiguration (25) mindestens einen Sicherheitsdatensatz (27) für das Steuerungssystem (50) umfasst.

2. Computerimplementiertes Verfahren (100) nach Anspruch 1, wobei nach dem Schritt des Erzeugens (106) der Sicherheitskonfiguration (25) ein Schritt des Optimierens (108) der Sicherheitskonfiguration auf der Grundlage dritter Daten (30), die sich auf mindestens eine Sicherheitsanforderung (29) des Steuerungssystems (50) beziehen, durchgeführt wird.

3. Computerimplementiertes Verfahren (100) nach einem der vorhergehenden Ansprüche, wobei ein Schritt (110) des Bereitstellens einer Rückmeldung bezüglich einer Systemzustandsinformation (52) des Steuerungssystems (50) an den Policy-Generator (60) durchgeführt wird, um die erzeugte Sicherheitskonfiguration (25) des Steuerungssystems (50) anzupassen.

4. Computerimplementiertes Verfahren (100) nach einem der vorhergehenden Ansprüche, wobei zumindest einige der Schritte (102, 104, 106) in einer Offline-Phase während einer Anlaufphase des Steuerungssystems (50) durchgeführt werden.

5. Computerimplementiertes Verfahren (100) nach Anspruch 3, wobei der Schritt (110) des Bereitstellens der Rückmeldung in einer Online-Phase während eines Laufzeitbetriebs des Steuerungssystems (50) durchgeführt wird.

6. Computerimplementiertes Verfahren (100) nach einem der vorhergehenden Ansprüche, wobei der mindestens eine Sicherheitsdatensatz (27) mindestens einen Parameter für ein Container-Orchestrierungssystem adressiert, zumindest umfassend Knoten, Pods, Anwendungen und Inter-Komponenten-Kommunikationen innerhalb eines Clusters.

7. Computerimplementiertes Verfahren (100) nach einem der vorhergehenden Ansprüche, wobei die erzeugte Sicherheitskonfiguration (25) mindestens eines der Folgenden einschränkt: eine Kommunikationsfähigkeit zwischen Komponenten des Steuerungssystems (50), einen Ressourcenverbrauch von mindestens einer Komponente des Steuerungssystems (50), einen Zugriff auf mindestens eine Rechenressource der mindestens einen Komponente des Steuerungssystems (50), das Ermöglichen einer Benutzerauthentifizierung und eines autorisierten Zugriffs auf das Steuerungssystem (50) oder das Ermöglichen einer Protokollierung von Sicherheitsereignissen in Bezug auf das Steuerungssystem (50).

8. Computerimplementiertes Verfahren (100) nach Anspruch 3, wobei der Schritt (110) des Bereitstellens einer Rückmeldung bezüglich einer Systemzustandsinformation (52) des Steuerungssystems (50) an den Policy-Generator (60) durch einen Menschen unterstützt wird, der interaktiv nach Rückmeldung gefragt wird, die dabei hilft, die Sicherheitskonfiguration des Steuerungssystems (50) anzupassen und zu verbessern.

9. Computerimplementiertes Verfahren (100) nach einem der vorhergehenden Ansprüche, wobei der Policy-Generator (60) mindestens teilweise eine Datenbank (intern, extern) verwendet, die zuvor erzeugte und optimierte Sicherheitskonfigurationen für das Steuerungssystem (50) speichert.

10. Computerimplementiertes Verfahren (100) nach einem der vorhergehenden Ansprüche 2 bis 9, wobei nach dem Schritt des Erzeugens (106) der Sicherheitskonfiguration (25) der Schritt des Optimierens (108) der Sicherheitskonfiguration auf der Grundlage vierter Daten (40), die sich auf mindestens eine Sicherheitsanforderung (29) des Steuerungssystems (50) beziehen, durchgeführt wird.

11. Computerimplementiertes Verfahren (100) nach einem der vorhergehenden Ansprüche, wobei nach dem Schritt des Erzeugens (106) der Sicherheitskonfiguration (25) ein Schritt des Simulierens (112) der Sicherheitskonfiguration (25) durchgeführt wird, um deren Auswirkung auf einen Leistungsparameter des Steuerungssystems (50) zu bewerten.

12. System (70), umfassend Mittel, die dazu eingerichtet sind, das Verfahren nach einem der Ansprüche 1 bis 11 durchzuführen.

13. Computerprogrammprodukt, umfassend Anweisungen, die, wenn das Computerprogramm durch einen Prozessor eines Computers ausgeführt wird, den Computer veranlassen, das Verfahren nach einem der Ansprüche 1 bis 11 durchzuführen.

14. Maschinenlesbares Datenträgermedium und/oder Download-Produkt, das das Computerprogramm nach Anspruch 13 enthält.

## Revendications

1. Procédé (100) mis en œuvre par ordinateur pour générer automatiquement une configuration de sécurité (25) pour un système de contrôle (50), le procédé comprenant les étapes suivantes :
- fournir (102) des premières données (10) configurées sous la forme de données d'ingénierie liées à des informations sur le système de contrôle (50),
- fournir (104) au moins des deuxièmes données (20) relatives à des données de modèle de topologie du système de contrôle (50), où les données de modèle de topologie comportent des modèles d'apprentissage automatique (ML), où ces modèles contiennent en outre au moins l'une des informations suivantes : un type applicatif, des extrémités de communication, l'interconnexion entre applications ;
- générer (106) la configuration de sécurité (25) pour le système de contrôle (50) par un générateur de politiques (60) sur la base des premières données (10) et des au moins deuxièmes données (20), où la configuration de sécurité générée (25) comporte au moins un ensemble de données de sécurité (27) pour le système de contrôle (50).

2. Procédé (100) mis en œuvre par ordinateur selon la revendication 1, dans lequel, après l'étape de génération (106) de la configuration de sécurité (25), une étape d'optimisation (108) de la configuration de sécurité sur la base de troisièmes données (30) liées à au moins une exigence de sécurité (29) du système de contrôle (50) est réalisée.

3. Procédé (100) mis en œuvre par ordinateur selon l'une quelconque des revendications précédentes, dans lequel une étape (110) de fourniture de retour d'informations concernant des informations d'état de système (52) du système de contrôle (50) au générateur de politiques (60) est réalisée afin d'ajuster la configuration de sécurité générée (25) du système de contrôle (50).

4. Procédé (100) mis en œuvre par ordinateur selon l'une quelconque des revendications précédentes, dans lequel au moins certaines des étapes (102, 104, 106) sont réalisées dans une phase hors ligne pendant une phase de démarrage du système de contrôle (50).

5. Procédé (100) mis en œuvre par ordinateur selon la revendication 3, dans lequel l'étape (110) comprenant de fournir un retour d'informations est réalisée dans une phase en ligne pendant une opération d'exécution du système de contrôle (50).

6. Procédé mis en œuvre par ordinateur (100) selon l'une quelconque des revendications précédentes, dans lequel l'au moins un ensemble de données de sécurité (27) adresse au moins un paramètre pour un système d'orchestration de conteneurs, comprenant au moins des nœuds, des pods, des applications, et des communications entre composants au sein d'un cluster.

7. Procédé (100) mis en œuvre par ordinateur selon l'une quelconque des revendications précédentes, dans lequel la configuration de sécurité générée (25) restreint au moins l'un des éléments suivants : une capacité de communication entre des composants du système de contrôle (50), elle limite la consommation de ressources d'au moins un composant du système de contrôle (50), elle restreint l'accès à au moins une ressource de calcul de l'au moins un composant du système de contrôle (50), permettant l'authentification de l'utilisateur et l'accès autorisé au système de contrôle (50) ou permettant l'enregistrement d'événements de sécurité concernant le système de contrôle (50).

8. Procédé mis en œuvre par ordinateur (100) selon la revendication 3, dans lequel l'étape (110) comprenant de fournir un retour d'informations concernant des informations d'état de système (52) du système de contrôle (50) au générateur de politiques (60) est supportée par une personne qui est interrogée de manière interactive pour un retour d'informations qui aide à adapter et à améliorer la configuration de sécurité du système de contrôle (50).

9. Procédé (100) mis en œuvre par ordinateur selon l'une quelconque des revendications précédentes, dans lequel le générateur de politiques (60) utilise une base de données au moins partielle (interne, externe) qui stocke des configurations de sécurité précédemment générées et optimisées pour le système de contrôle (50).

10. Procédé (100) mis en œuvre par ordinateur selon l'une quelconque des revendications 2 à 9 précédentes, dans lequel, après l'étape de génération (106) de la configuration de sécurité (25), l'étape d'optimisation (108) de la configuration de sécurité est basée sur des quatrièmes données (40) liées à au moins une exigence de sécurité (29) du système de contrôle (50).

11. Procédé (100) mis en œuvre par ordinateur selon l'une quelconque des revendications précédentes, dans lequel, après l'étape de génération (106) de la configuration de sécurité (25), une étape de simulation (112) de la configuration de sécurité (25) est réalisée pour évaluer son impact sur un paramètre de performance du système de contrôle (50).

12. Système (70) comprenant des moyens configurés pour exécuter le procédé selon l'une quelconque des revendications 1 à 11.

13. Produit de programme d'ordinateur comportant des instructions qui, lorsque le programme d'ordinateur est exécuté par un processeur d'un ordinateur, amènent l'ordinateur à réaliser le procédé selon l'une quelconque des revendications 1 à 11.

14. Support de données lisible par machine et/ou produit à télécharger, comprenant le programme d'ordinateur selon la revendication 13.
